Europäisches Patentamt

European Patent Office

Office européen des brevets

(19)

(11) Publication number: **0 252 159**
A1

(12)

# EUROPEAN PATENT APPLICATION
published in accordance with Art. 158(3) EPC

(21) Application number: **87900689.8**

(22) Date of filing: **08.01.87**

Data of the international application taken as a basis:

(86) International application number:
**PCT/JP87/00012**

(87) International publication number:
**WO87/04268 (16.07.87 87/15)**

(51) Int. Cl.³: **G 03 B 27/54**

(30) Priority: **14.01.86 JP 4227/86**

(43) Date of publication of application:
**13.01.88 Bulletin 88/2**

(84) Designated Contracting States:
**BE DE FR GB**

(71) Applicant: **POLAROID CORPORATION**
**549 Technology Square**
**Cambridge, Massachusetts 02139(US)**

(72) Inventor: **ICHIMURA, Hajime**
**Purinsu Vira 201 3-28-19, Minamisenzoku**
**Ota-ku Tokyo 145(JP)**

(74) Representative: **Skone James, Robert Edmund et al,**
**GILL JENNINGS & EVERY 53-64 Chancery Lane**
**London WC2A 1HN(GB)**

(54) FLASH LIGHTING DEVICE.

(57) A flash lighting device for a copier or the like in which the whole surface of an original is simultaneously irradiated with light from a reflection umbrella that surrounds flash lamps and that has an opening on the side facing the irradiation surface and from one or more flash lamps that have an optical converge/diverge element to cover the opening, and the reflected light is focused on a photosensitive material via an optical system to expose it. The optical converge/diverge element is provided with a function of an ND filter which has such a density distribution as to decrease the quantity of light directly falling from the flash lamps onto the original, thus improving the uniformity of the luminosity distribution produced by the flash lamps on the surface of the original.

F I G. IA

SPECIFICATION

FLASH ILLUMINATION APPARATUS

TECHNICAL FIELD

The present invention relates to a flash illumination apparatus for a copying machine and the like in which an original is illuminated simultaneously over the whole surface thereof by a single or a plurality of flash lamps, wherein light reflected from the original is focused onto a light sensitive material through an optical system for thereby carrying out exposure.

BACKGROUND ART

A so-called strobe flash illumination apparatus employing a xenon discharge tube is utilized in various fields as a convenient light source of high efficiency. When used as the original illuminating apparatus in a copying machine, the above-mentioned apparatus is advantageous in respects to low heat generation, excellent color rendering properties and others, thus assuring a high utility. However, in the case of the copying machine in which an original is simultaneously illuminated over the whole surface thereof, it is necessary to illuminate uniformly the original as a whole. Since such uniform illumination cannot be accomplished solely with the flash lamp by itself, it has been heretofore practiced to make use of a reflector or the like. By using the reflector, a greater proportion of light rays emitted from the lamp can be caused to reach the surface of the original, whereby the utilization efficiency of light energy can be enhanced. However, with regards to the uniform illumination over the whole surface of the original, this arrangement was inadequate.

When used as the strobe flash in the photographing, such a structure is generally adopted in which a collecting and diffusing optical element (stepped concave or convex lens such as a Fresnel lens) is provided on the front side of the reflector. In the case of this structure, the light rays emitted directly from the lamp as well as those reflected by the reflector equally undergo collecting and diffusing action. Thus, this structure is dissatisfactory as the means for realizing the uniform illumination even though it can widen the range within which light rays can reach, because the light rays directly emitted by the lamp and those reflected by the reflector are equally diffused.

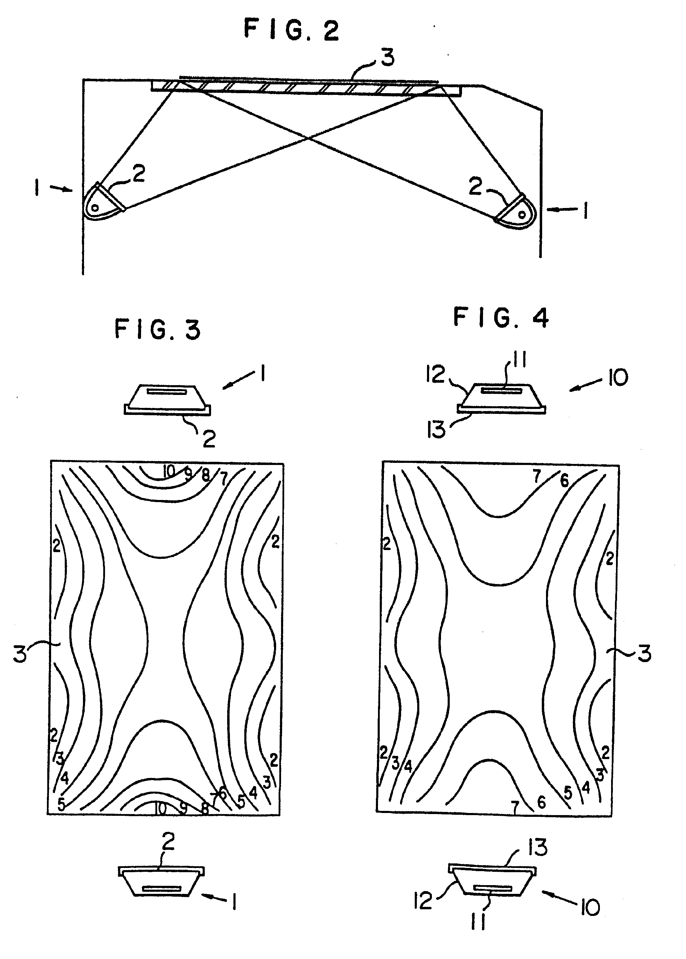

Fig. 3 is a view showing an example of illuminance distribution over an original surface obtained by illuminating the original surface from below with inclination by means of lamp units 1 each having a collecting and diffusing optical element 2 and disposed below the original 3 at both sides thereof. Curves shown in the figure represent equi-illuminance curves, wherein numerals inserted between the curves indicate the relative values of illuminance in the associated areas on the assumption that illuminance in the vicinity of the lamp 1 is given by 10. It will be seen that illuminance is decreased to 2 at both lateral sides in Fig. 2.

In view of the aforementioned drawbacks of the hitherto known original illuminating apparatus employing the flash lamps for use in the copying machine and others, it is an object of the present invention to provide a flash illumination apparatus for use in the copying machines and others which is capable of uniformizing to an acceptable extent the illuminance distribution on an original surface illuminated with flash lamps.

## DISCLOSURE OF THE INVENTION

For accomplishing the above object, the flash illumination apparatus according to the present invention is characterized in that the collecting and diffusing optical element provided to cover the opening of a reflector for a flash lamp is additionally imparted with the function of an ND filter having such a density distribution that mainly the quantity of light rays impinging directly on the original from said flash lamp is decreased.

- 3 -

## BRIEF EXPLANATION OF THE DRAWINGS

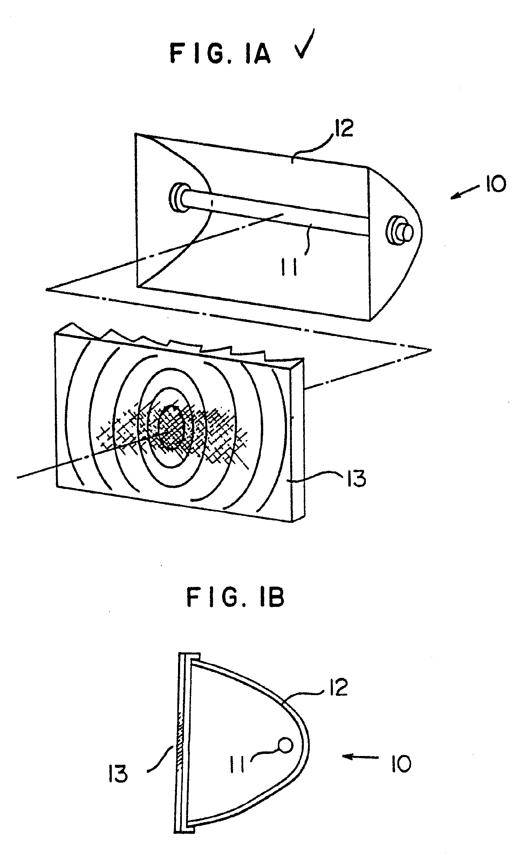

Figs. 1(a) and (b) are an exploded perspective view and a cross-sectional view, respectively, of an embodiment of the present invention, Fig. 2 shows a hitherto known original illuminating apparatus, Fig. 3 is a view showing, by way of example, distribution of illuminance over an original illuminated with the apparatus shown in Fig. 2, and Fig. 4 is a view showing, by way of example, distribution of illuminance over an original illuminated with the illuminating apparatus according to the present invention.

## BEST MODE FOR CARRYING OUT THE INVENTION

In the following, an exemplary embodiment of the present invention will be described in detail with reference to the drawings.

Figs. 1(a) and (b) are views showing an exemplary embodiment of the present invention. The lamp unit 10 does not differ from the hitherto known lamp unit in that it is composed of a flash lamp 11, a reflector 12 opened on the side for illumination, and a collecting and diffusing optical element 13 covering the opening. However, the surface of the collecting and diffusing optical element 13 has light transmissivity varied in such a manner in which the density is progressively decreased toward the periphery from the center, as is illustrated

- 4 -

in Fig. 1(a), so that the filter may also serve as an
ND filter of such a density distribution that mainly
the quantity of light impinging on the original directly
from the flash lamp 11 can be reduced.

Accordingly, although a substantially same
quantity of light as in the case of the hitherto known
illuminating apparatus can be transmitted in the peripheral
portion of the collecting and diffusing optical element
13, transmissivity of light is decreased progressively
toward the center portion. As the result, the illuminance
distribution on an original illuminated with the flash
units according to the invention from below in the
oblique directions at both sides of the original is such
as shown in Fig. 4 from which it will be seen that with
reference to the relative numerical values indicative of
the illuminance distribution realized by the hitherto
known illuminating apparatus, illuminance is same as in
the case of the hitherto known apparatus in the region
near to the right and left lateral sides and regions
located slightly leftward and rightward from the center.
However, in the regions near to the top and bottom ends
as well as in the center region of the drawing, illuminance
is reduced more than that in the hitherto known apparatus.
Thus, the illuminance distribution can be made to
approximate to the uniform distribution.

Although the provision of the ND filter is not advantageous in that the utilization efficiency of light energy is degraded, the uniformized illumination by using the ND filter is nevertheless advantageous for the copying machines even at the expense of some degradation in the utilization efficiency of light energy in view of the facts that the distance from the light source to the original surface in the copying machine is far shorter as compared with the distance between the strobe flash light and the object to be photographed in the case of the photographic camera, a lamp of low light energy is sufficient for practical application and that the strobe flash apparatus of high light energy can be manufactured relatively easily.

In the case of the illustrated embodiment, the collecting and diffusing optical element 13 itself is colored so as to serve also as the ND filter. As an alternative, an ND filter may be disposed in superposition en either one of the surfaces of the collecting diffusing optical element 13.

INDUSTRIAL APPLICABILITY

This flash illumination apparatus can be utilized in a copying machine of such type in which an original is simultaneously illuminated over the whole surface thereof as well as in an original illuminating device for an apparatus for preparing diapositives for projection.

- 6 -

CLAIM

A flash illumination apparatus in which an original is illuminated simultaneously over the whole surface thereof by a single or a plurality of flash lamps each provided with a reflector enclosing the lamp and having an opening formed on the side for illumination and a collecting and diffusing optical element covering said opening, wherein light reflected by said original is focused onto a light sensitive material through an optical system for performing exposure, characterized in that said collecting and diffusing optical element is additionally imparted with the function of an ND filter having such a density distribution that mainly the quantity of light rays impinging directly on the original from said flash lamp is decreased.

# FIG. IA ✓

# FIG. IB

0252159

# FIG. 2

# FIG. 3

# FIG. 4

0252159

# INTERNATIONAL SEARCH REPORT

International Application No. PCT/JP87/00012

| I. CLASSIFICATION OF SUBJECT MATTER (if several classification symbols apply, indicate all) |
|---|
| According to International Patent Classification (IPC) or to both National Classification and IPC |
| Int.Cl$^4$  G03B27/54 |

**II. FIELDS SEARCHED**

| Minimum Documentation Searched | |
|---|---|
| Classification System | Classification Symbols |
| IPC | G03B27/54, G02B17/00-17/08 |

| Documentation Searched other than Minimum Documentation to the Extent that such Documents are Included in the Fields Searched |
|---|
| Jitsuyo Shinan Koho          1926 - 1986 <br> Kokai Jitsuyo Shinan Koho    1971 - 1986 |

**III. DOCUMENTS CONSIDERED TO BE RELEVANT**

| Category* | Citation of Document, with indication, where appropriate, of the relevant passages | Relevant to Claim No. |
|---|---|---|
| Y | JP, U, 56-15158 (Jujo Engineering Kabushiki Kaisha) <br> 9 February 1981 (09. 02. 81) <br> Column 2, line 12 to column 3, line 10, Figs. 3 to 4 (Family: none) | 1 |
| Y | JP, U, 58-178134 (Cowa Company Ltd.) <br> 29 November 1983 (29. 11. 83) <br> Column 3, line 16 to column 5, line 2, Figs. 2 to 3 (Family: none) | 1 |
| Y | JP, A, 59-177532 (Canon Inc.) <br> 8 October 1984 (08. 10. 84) <br> Column 1, line 10 to column 2, line 9, Fig. 1 (Family: none) | 1 |
| Y | JP, A, 60-225136 (Fuji Xerox Co., Ltd.) <br> 9 November 1985 (09. 11. 85) <br> Column 6, lines 1 to 5, Figs. 1 to 2 (Family: none) | 1 |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| March 12, 1987 (12. 03. 87) | March 23, 1987 (23. 03. 87) |
| International Searching Authority | Signature of Authorized Officer |
| Japanese Patent Office | |

Form PCT/ISA/210 (second sheet) (October 1981)

| FURTHER INFORMATION CONTINUED FROM THE SECOND SHEET | | |
|---|---|---|
| A | JP, U, 54-70431 (Ricoh Co., Ltd.)<br>19 May 1979 (19. 05. 79)<br>Column 2, line 13 to column 3, line 4,<br>column 4, lines 9 to 16, Figs. 3 to 7<br>(Family: none) | 1 |
| A | JP, U, 58-172262 (Sanyo Electric Co., Ltd.)<br>17 November 1983 (17. 11. 83)<br>Column 4, lines 1 to 5, Figs. 4 to 5<br>(Family: none) | 1 |

**V.☐ OBSERVATIONS WHERE CERTAIN CLAIMS WERE FOUND UNSEARCHABLE[10]**

This international search report has not been established in respect of certain claims under Article 17(2) (a) for the following reasons:

1.☐ Claim numbers............ because they relate to subject matter[11] not required to be searched by this Authority, namely:

2.☐ Claim numbers............ because they relate to parts of the international application that do not comply with the prescribed requirements to such an extent that no meaningful international search can be carried out[12], specifically:

**VI.☐ OBSERVATIONS WHERE UNITY OF INVENTION IS LACKING[11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)

0252159

International Application No.  PCT/JP87/00012

| A | JP, A, 60-48038 (Toshiba Corp.)<br>15 March 1985 (15. 03. 85)<br>Column 2, line 18 to column 3, line 11<br>column 5, lines 4 to 13, Fig. 1<br>(Family: none) | 1 |

**V.☐ OBSERVATIONS WHERE CERTAIN CLAIMS WERE FOUND UNSEARCHABLE** [10]

This international search report has not been established in respect of certain claims under Article 17(2) (a) for the following reasons:

1.☐ Claim numbers............. because they relate to subject matter [12] not required to be searched by this Authority, namely:

2.☐ Claim numbers............ because they relate to parts of the international application that do not comply with the prescribed requirements to such an extent that no meaningful international search can be carried out [13], specifically:

**VI.☐ OBSERVATIONS WHERE UNITY OF INVENTION IS LACKING** [11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.